# EUROPÄISCHE PATENTSCHRIFT

(11) **EP 1 587 191 B1**
(45) Veröffentlichungstag und Bekanntmachung des Hinweises auf die Patenterteilung: **28.08.2013**
(21) Anmeldenummer: 05007216.4
(22) Anmeldetag: 01.04.2005
(51) Int. Cl.: H02B 1/32

(54) **Vorrichtung zum Befestigen einer Montageplatte in vorgegebenem Abstand zu einer Seitenwand eines Schaltschrankes**
Device for fastening a mounting plate at a prescribed distance to a side wall of an electrical cabinet
Dispositif pour attacher une plaque de montage à une distance prescrite par rapport à une armoire électrique

(30) Priorität: 18.04.2004 DE 102004020319
(43) Veröffentlichungstag der Anmeldung: 19.10.2005
(73) Patentinhaber: Rittal GmbH & Co. KG, 35745 Herborn (DE)
(72) Erfinder: Besserer, Horst, 35745 Herborn (DE); Elm, Oskar, 35713 Eschenburg (DE); Schauwecker, Uwe, 35745 Herborn (DE)
(74) Vertreter: Tönhardt, Marion

(56) Entgegenhaltungen:
- EP-A- 0 901 207
- EP-A- 1 164 672
- DE-U1- 8 106 878
- DE-U1- 9 307 113

## Beschreibung

Vorrichtung zum Befestigen einer Montageplatte in einem vorgegebenen Abstand zu einer Seitenwand eines Schaltschranks mittels Halteelementen, die der Unter- und Oberseite der Montageplatte zugeordnet und am Schaltschrank befestigt sind, wobei der Unterseite der Montageplatte mindestens zwei untere Halteelemente zugeordnet sind, wobei die unteren Halteelemente im vorgegebenen Abstand zur Seitenwand eine horizontale, nach oben offene Einstecknut für die Unterseite der Montageplatte aufweisen, wobei die Einstecknut ein in die Einstecknut ragendes Fixierelement für eine an der Unterseite der Montageplatte vorgesehene Fixieraufnahme trägt, wobei der Oberseite der Montageplatte mindestens ein oberes Halteelement zugeordnet ist, das im vorgegebenen Abstand zur Seitenwand mit einem Anlageblock eine Anlagefläche für die Montageplatte bildet und wobei über dem Anlageblock das obere Halteelement eine Rastfeder mit Rastschräge und Rastabsatz aufweist, wobei der Rastabsatz in der Anlagestellung der Montageplatte am Anlageblock die Oberseite der Montageplatte hintergreift und am oberen Halteelement festlegt. Eine derartige Vorrichtung ist aus der EP 0 901 207 A1 bekannt.

Der Einbau einer Montageplatte in den Innenraum eines Schaltschrankes erfordert immer einen mehr oder weniger großen Teile- und Montageaufwand. So sind z.B. bei einem Schaltschrankaufbau mit einem Rahmengestell aus horizontalen und vertikalen Rahmenschenkeln im Bodenbereich des Rahmengestelles Führungsschienen am Rahmengestell angebracht werden, auf denen die Montageplatte aufgesetzt und in Richtung der Rückwand verschoben werden kann. Hat die auf den Führungsschienen geführte Unterseite der Montageplatte die Endstellung erreicht, dann wird sie aus der schrägen Einführstellung vertikal ausgerichtet und mit besonderen Halteelementen im oberen Bereich des Rahmengestelles, vorzugsweise den oberen horizontalen Rahmenschenkeln befestigt. Für die Einführung der Montageplatte ist die Unterseite der Montageplatte mit Führungselementen versehen, die auch zur Festlegung der Montageplatte auf den Führungsschienen verwendet werden kann. Neben den Führungsschienen, den Führungselementen und den Halteelementen kommt eine schwierig durchzuführende Montagearbeit hinzu, da die aufgerichtete Montageplatte die Halteelemente schwer zugänglich macht

Es ist Aufgabe der Erfindung, eine Vorrichtung der eingangs erwähnten Art zu schaffen, die nur wenige einfache Halteelemente erfordert und die Montagearbeit zur Festlegung der Montageplatte wesentlich vereinfacht und erleichtert.

Diese Aufgabe wird nach der Erfindung dadurch gelöst, dass jedes der unteren Halteelemente an der Seitenwand und/oder einer anschließenden Bodenwand befestigt ist, wozu es über die Rückseite eines Befestigungsblocks an einer Innenseite der Seitenwand anliegt oder befestigt ist, während eine Unterseite des Befestigungsblocks auf der Bodenwand aufsteht oder mit dieser verbunden ist, wobei das obere Halteelement rückseitig mit einem Flansch an der Innenseite der Seitenwand anliegt, und wobei sich der Anlageblock an den Flansch anschließt und mit seiner vorderseitigen Anlagefläche den vorgegebenen Abstand bestimmt.

Diese Ausgestaltung der Vorrichtung sieht an der Montageplatte nur die Fixieraufnahme und die Bohrungen vor. Die unteren und oberen Halteelemente können vorab an der Seitenwand befestigt werden. Dabei muss die Seitenwand nicht unbedingt die Rückwand des Schaltschrankes sein und der Schaltschrank muss kein Rahmengestell aufweisen. Darüber hinaus muss sich die Montageplatte nicht über die gesamte Höhe des Schaltschrankes erstrecken. Die Montage ist sehr einfach, da die Unterseite der Montageplatte nur in die Einstecknuten der unteren Halteelemente eingeführt werden muss. Beim Aufrichten und Anlegen an mindestens ein oberes Halteelement wird mittels einer Rastverbindung die Oberseite der Montageplatte festgelegt. Dabei bestimmen die Halteelemente mit den Befestigungs- und Anlageblöcken den Abstand zur Seitenwand.

Die unteren Halteelemente können mit dem Befestigungsblock sowohl an der Seitenwand als auch an einer anschließenden Bodenwand befestigt werden. Dazu gibt es viele Varianten der Verbindung, die nicht für die Erfindung entscheidend sind und freizügig hergestellt werden können.

Mit der Einführung der Unterseite der Montageplatte erfolgt dadurch sofort eine horizontale Ausrichtung und Fixierung, dass die Fixieraufnahmen an der Unterseite der Montageplatte portalartig ausgebildet sind und dass die in die Einstecknut ragenden Fixierelemente mit ihren Außenseiten an diese Fixieraufnahmen angepasst sind. Ist dabei vorgesehen, dass die Fixierelemente in der horizontalen Mitte der Einstecknut der unteren Halteelemente angeordnet sind, dann kann für die linke und rechte Seite der Montageplatte ein einheitlich ausgebildetes unteres Halteelement verwendet werden.

Das Einführen der Unterseite der Montageplatte in die Einstecknuten der unteren Halteelemente wird dadurch erleichtert, dass die der Seitenwand abgekehrte Nutwand der Einstecknut als Einfuhrschräge mit zur Nutgrundwand stumpfem Winkel ausgebildet ist.

Bei dem Anbringen der unteren Halteelemente ist zu beachten, dass die Unterseite der Montageplatte die beiden Fixieraufnahmen mit vorgegebenem horizontalem Abstand trägt und dass die beiden unteren Halteelemente so an der Seitenwand und/oder der anschließenden Bodenwand des Schaltschrankes befestigt sind, dass ihre Fixierelemente denselben horizontalen Abstand einnehmen, um beidseitig eine eindeutige, horizontale Fixierung zu erreichen.

Die Anbringung der oberen Halteelemente ist nach einer Ausgestaltung so vorgenommen, dass im Bereich der oberen Halteelemente die Seitenwand jeweils zwei horizontal beabstandete Gewindebolzen trägt, von denen einer den Anlageblock des oberen Halteelementes durchdringt und durch eine Bohrung in der Oberseite der Montageplatte geführt ist, und dass mit einer Mutter die Montageplatte am Anlageblock des oberen Halteelementes festgelegt und das obere Halteelement gleichzeitig an der Seitenwand befestigt ist.

Auch im Bereich der Oberseite der Montageplatte erfolgt eine horizontale Fixierung. Dazu ist vorgesehen, dass die Anlagefläche des Anlageblockes einen Zentrierbund aufweist, der in eine als Zentrieraufnahme ausgebildete Bohrung der Montageplatte eingeführt ist und dass der erste als Befestigungsbolzen ausgebildete Gewindebolzen durch den Zentrierbund geführt ist.

Die Befestigung wird dadurch vervollständigt, dass der zweite Gewindebolzen in eine Aufnahme des Anlageblockes des oberen Halteelementes eingeführt ist und zusammen mit dem ersten Gewindebolzen das obere Halteelement unverdrehbar an der Seitenwand festlegt.

Eine besonders vorteilhafte Ausgestaltung der Vorrichtung ist dadurch gekennzeichnet, dass eine Montageplatte an der Unterseite zwei beabstandete Fixieraufnahmen und an der Oberseite zwei Bohrungen als Fixieraufnahmen mit gleichem horizontalem Abstand aufweist, dass die Fixieraufnahmen und die Bohrungen vertikal aufeinander ausgerichtet sind und dass die Halteelemente horizontal und vertikal so beabstandet sind, dass an der Unterseite der Montageplatte zwei Steckverbindungen mit horizontaler Fixierung und an der Oberseite der Montageplatte zwei Rastverbindungen mit horizontaler Fixierung gebildet sind.

Dabei kann aus Stabilitätsgründen zusätzlich vorgesehen sein, dass die Montageplatte an den vertikalen Seiten abgekantete Ränder aufweisen und dass die Fixieraufnahmen und die Bohrungen der Montageplatte einen Abstand zu diesen Rändern aufweisen, der größer ist als die halbe horizontale Breite der Halteelemente. Die Ränder der Montageplatte finden dann genügend Platz neben den Halteelementen.

Die Erfindung wird anhand eines Ausführungsbeispiels näher erläutert. Es zeigen:
- Fig. 1: schematisch in perspektivischer Ansicht die Innenseite einer Schaltschrank-Seitenwand mit davor angeordneter, zu montierender Montageplatte,
- Fig. 2: in Teilansicht ein unteres Halteelement mit einzuführender Teil-Unterseite einer Montageplatte,
- Fig. 3: in Teilansicht die in die Einstecknut des unteren Halteelementes eingeführte Unterseite der Montageplatte,
- Fig. 4: in Teilansicht ein oberes Halteelement vor dem Befestigungsbereich einer Seitenwand,
- Fig. 5: in Teilansicht das obere Halteelement an der Seitenwand befestigt und mit einer Oberseite der am Halteelement festgelegten Montageplatte und
- Fig. 6: in einem schematischen Montageschnitt die Einführung der Unterseite der Montageplatte an einem unteren Halteelement und die Verrastung und Festlegung der Oberseite der Montageplatte an einem oberen Halteelement.

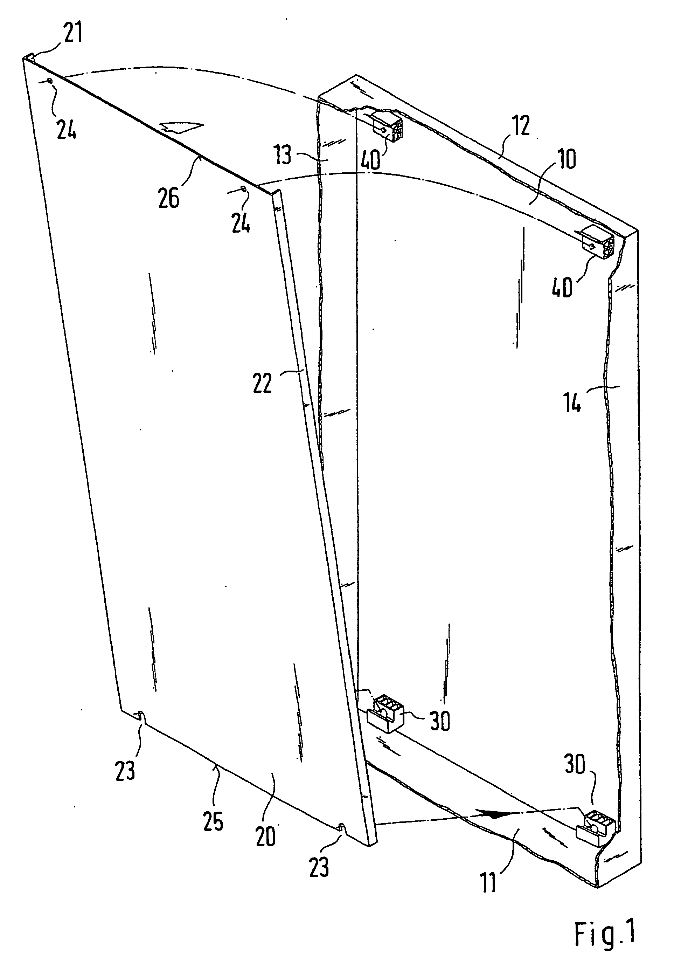

Wie die Fig. 1 zeigt, kommt es bei der erfindungsgemäßen Vorrichtung zum Befestigen von einer Montageplatte 20 im Innenraum eines Schaltschrankes, wenn diese zu einer Seitenwand 10 einen vorgegebenen Abstand einnehmen soll, auf die Ausgestaltung des Schrankaufbaues nicht entscheidend an. Es ist auch nicht erforderlich, dass die Seitenwand 10 unbedingt die Rückwand sein muss. Daher zeigt die Fig. 1 nur schematisch und perspektivisch die Innenseite einer Seitenwand 10, die in eine Bodenwand 11, eine Deckwand 12 und anschließende Seitenwände 13 und 14 übergeht.

Auf der Innenseite der Seitenwand 10 sind horizontal beabstandet zwei untere Halteelemente 30 befestigt, die an der Rückseite an der Seitenwand 10 und/oder mit der Unterseite an der anschließenden Bodenwand 14 befestigt sein können. Vertikal ausgerichtet sind im oberen Bereich der Seitenwand 10 zwei obere Halteelemente 40 befestigt und daher im gleichen horizontalen Abstand wie die unteren Halteelemente 30.

Die an der Seitenwand 10 anzubringende Montagewand 20 hat aus Stabilitätsgründen nur an den vertikalen Seiten abgekantete Ränder 21 und 22. An der Unterseite 25 der Montageplatte 20 sind portalartige Fixieraufnahmen 23 vorgesehen und an der Oberseite 26 trägt die Montageplatte 10 zwei Bohrungen 24. Die Fixieraufnahmen 23 und die Bohrungen 24 der Halteelemente 30 und 40 liegen auf den Eckpunkten eines Rechteckes.

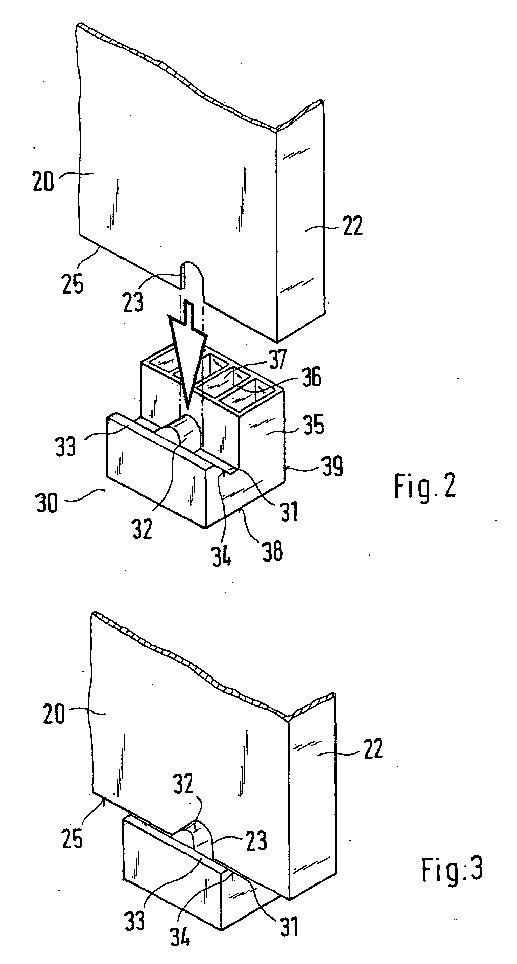

Wie die Teilansicht nach Fig. 2 zeigt, kann das untere Halteelemente 30 im Wesentlichen als Hohlkörper ausgebildet sein, wobei ein Befestigungsblock 35 mit seiner Rückseite 39 an der Seitenwand 10 anliegt und/oder befestigt wird, während die Unterseite 38 auf der Bodenwand 11 aufsteht und/oder mit dieser verbunden ist. Mit dieser Formulierung soll zum Ausdruck gebracht werden, dass es bei der Erfindung auf die Art und Weise der Befestigung des unteren Halteelementes 30 nicht entscheidend ankommt.

Der Befestigungsblock 35 ist durch Trennwände 36 in Kammern 37 unterteilt, um mit wenig Material auf einfache Weise als Spritzgussteil hergestellt werden kann. Auf der der Seitenwand 10 abgekehrten Seite schließt sich eine Einstecknut 31 an, die horizontal ausgerichtet und nach oben offen ist. In der Mitte der Einstecknut 31 ragt ein Fixierelement 32 in die Einstecknut 31. Dabei liegt die Außenkontur des Fixierelementes 32 an die portalartige Fixieraufnahme 32 an der Unterseite der Montageplatte 20 an. Die vordere Nutwand 33, die auch hohl ausgebildet sein kann, bildet der Einstecknut 31 zugekehrt eine Einführschräge 34, die zum Nutgrund der Einstecknut 31 im stumpfen Winkel steht.

Wie die Fig. 3 zeigt, kann die Unterseite 25 der Montageplatet 20 in die Einstecknut 31 des unteren Halteelementes 30 eingeführt, d.h. eingesteckt werden. Dabei führt die Einführschräge 34 die Unterseite 25 der Montageplatte 20 auch bei Schrägstellung die Montageplatte 20 auf den Nutgrund der Einstecknut 31. Das Fixierelement 32 wird dabei in die Fixieraufnahme 23 der Montageplatte 20 eingeführt, wobei diese horizontal fixiert und festgelegt wird.

Aus der Fig. 3 ist auch abzuleiten, dass die Fixieraufnahmen 23 von dem Rand 22 der Montageplatte 20 einen Abstand einnehmen müssen, der größer ist als die halbe horizontale Breite des unteren Halteelementes 30. Auf diese Weise hat der Rand 22 genügend Platz neben dem Befestigungsblock 35 des unteren Halteelementes 30. Dies gilt sinngemäß auch für das linke untere Halteelement 30 und den Rand 21 der Montageplatte 20.

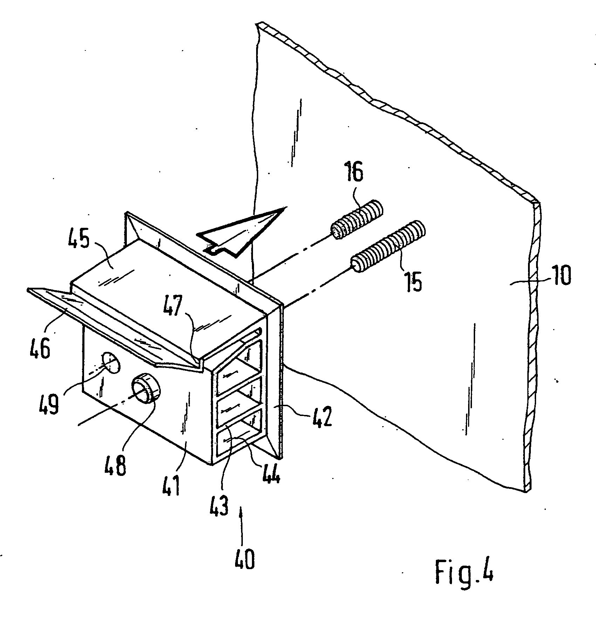

Betrachtet man die Teilansicht nach Fig. 4, dann ist ein oberes Halteelement 40 vor der Seitenwand 10 mit zwei Gewindebolzen 15 und 16 im Bereich der Befestigungsstelle gezeigt. Das obere Halteelement 40 liegt rückseitig mit einem Flansch 42 an der Innenseite der Seitenwand 10 an. Der Anlageblock 41 schließt sich an diesen Flansch 42 an und bestimmt mit seiner vorderseitigen Anlagefläche den vorgegebenen Abstand der anzubringenden Montageplatte 20 von der Seitenwand 10. Der Anlageblock 41 ist mit Trennwänden 43 in Kammern 44 utnerteilt, die diesmal horizontal ausgerichtet sind. Über dem Anlageblock 41 trägt das obere Halteelement 40 eine Rastfeder 45, die im Abstand zum Anschlagblock 41 steht und über einen Rastabsatz 47 in eine Rastschräge 46 ausläuft. Der erste Gewindebolzen 15 dient nicht nur zur Befestigung des oberen Halteelementes 40 an der Seitenwand 10, sondern kann auch zur festen Verbindung der Montageplatte 20 am Anlageblock 41 verwendet werden.

Der Gewindebolzen 15 wird durch den Anlageblock 41 geführt und passiert den Fixierbund 48, der an der Anlagefläche des Anlageblockes 41 abstehend angeformt ist. Der Gewindebolzen 16 dient, in eine Aufnahme 49 des Anlageblockes 41 eingeführt, nur der unverdrehbaren Festlegung des oberen Halteelementes 40 an der Seitenwand 10.

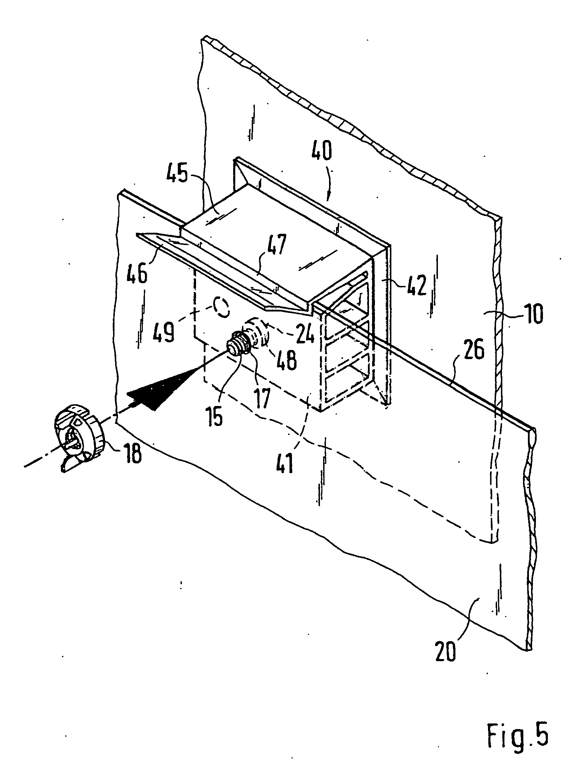

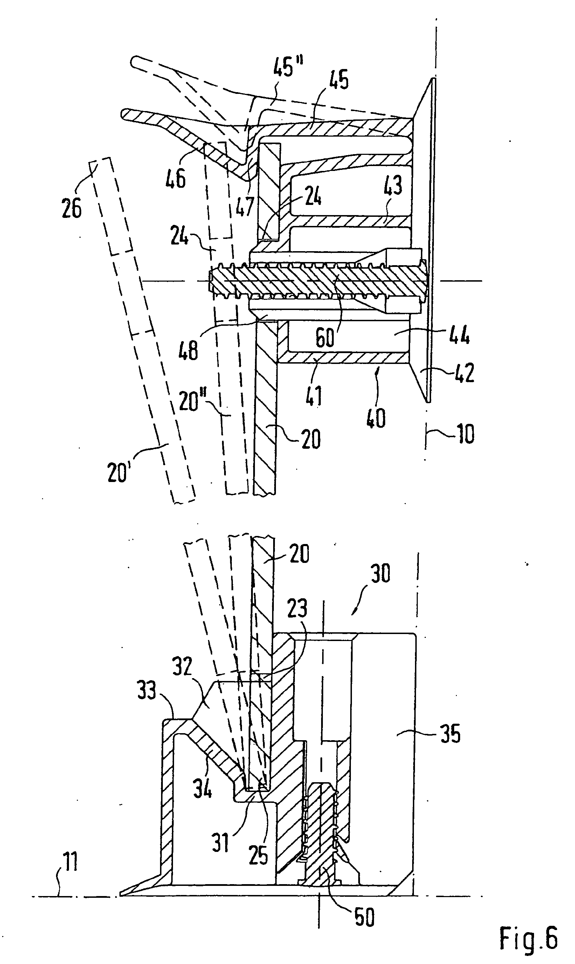

Ist das obere Halteelement 40 an der Seitenwand 10 befestigt, dann kann die in die Einstecknuten 31 der unteren Halteelemente 40 eingestellte Montageplatte 20 gegen die Anlageblöcke 41 der oberen Halteelemente 40 geschwenkt werden, wie die Stellungen 20' und 20" der Montageplatte 20 nach Fig. 6 zeigt. Der Fixierbund 48 mit dem Gewindebolzen 16 wird in eine als Fixieraufnahme dienende Bohrung 24 im Bereich der Oberseite 26 der Montageplatte 20 eingeführt, wie Fig. 5 zeigt. Vorher wird die Rastfeder 25 über die Oberseite 26 der Montageplatte 20 in die Stellung 45" ausgelegt. Liegt die Rückseite der Montageplatte 20 an der Anlagefläche des Anlageblockes 41 an, dann rastet die Rastfeder 45 auf die Oberseite 46 der Montageplatte 20 zurück, wobei der Rastabsatz 27 die Vorderseite der Montageplatte 20 hintergreift und diese an dem oberen Halteelement 40 festhält. Auf den am Fixierbund 48 vorstehenden vorstehenden Teil des Gewindebolzens 15 wird eine federnde Scheibe 17 aufgebracht und mit einer handbedienbaren Mutter 18 die Schraubverbindung hergestellt und festgelegt.

Wie in dem Montageschnitt nach Fig. 6 noch deutlich gezeigt ist, kann anstelle des Gewindebolzens 15 auch eine Schraube 60 im oberen Halteelement 40 festgelegt und für die Festlegung der Montageplatte 20 am oberen Halteelement 40 verwendet werden. Der Flansch 42 und damit der Anlageblock 41 des oberen Halteelementes 40 kann dann auf andere, an sich bekannte Art an der Innenseite der Seitenwand 10 befestigt sein.

Dasselbe gilt auch für das untere Halteelement 39, wie die Schraube 50 zeigt, die das untere Halteelement 30 mit der Bodenwand 11 und nicht mit der Seitenwand 10 verbinden kann.

In Fig. 6 ist deutlich zu erkennen, dass eine schräggestellte Montageplatte 20' über die Einführschräge 34 des unteren Halteelementes 30 leicht in die Einstecknut 31 eingeführt werden kann.

Zum Schluss soll noch einmal auf die Fig. 1 zurückgekommen werden. Die horizontale Breite der beiden Halteelemente 30 und 40 ist gleich und die Fixierelemente 32 der befestigten unteren Halteelemente 30 und die Fixierbünde 48 mit den Gewindebolzen 15 liegen auf einem Rechteck, das dem Rechteck der Fixieraufnahmen 23 und der Bohrungen 24 der Montageplatte 20 entspricht. Die Oberseite 26 der Montageplatte 20 muss soweit über den Bohrungen 24 liegen, dass sie die Rastfedern 45 über die Rastschrägen 46 auslenken kann und dass der Rastabsatz 47 in der Endmontagestellung die Montageplatte 20 hintergreift und festlegt.

## Patentansprüche

1. Vorrichtung zum Befestigen einer Montageplatte in einem vorgegebenen Abstand zu einer Seitenwand eines Schaltschranks mittels Halteelementen, die der Unter- und Oberseite der Montageplatte zugeordnet und am Schaltschrank befestigt sind, wobei der Unterseite (25) der Montageplatte (20) mindestens zwei untere Halteelemente (30) zugeordnet sind, wobei die unteren Halteelemente (30) im vorgegebenen Abstand zur Seitenwand (10) eine horizontale, nach oben offene Einstecknut (31) für die Unterseite (25) der Montageplatte (20) aufweisen, wobei die Einstecknut (31) ein in die Einstecknut (31) ragendes Fixierelement (32) für eine an der Unterseite (25) der Montageplatte (20) vorgesehene Fixieraufnahme (23) trägt, wobei der Oberseite (26) der Montageplatte (20) mindestens ein oberes Halteelement (40) zugeordnet ist, das im vorgegebenen Abstand zur Seitenwand (10) mit einem Anlageblock (41) eine Anlagefläche für die Montageplatte (20) bildet und wobei über dem Anlageblock (41) das obere Halteelement (40) eine Rastfeder (45) mit Rastschräge (46) und Rastabsatz (47) aufweist, wobei der Rastabsatz (47) in der Anlagestellung der Montageplatte (20) am Anlageblock (41) die Oberseite (26) der Montageplatte (20) hintergreift und am oberen Halteelement (40) festlegt,
**dadurch gekennzeichnet,**
**dass** jedes der unteren Halteelemente (30) an der Seitenwand (10) und/oder eine anschließende Bodenwand (11) befestigt ist, wozu es über die Rückseite (39) eines Befestigungsblocks (35) an der Seitenwand (10) anliegt oder befestigt ist, während eine Unterseite (38) des Befestigungsblocks (35) auf der Bodenwand (11) aufsteht oder mit dieser verbunden ist, wobei das obere Halteelement (40) rückseitig mit einem Flansch (42) an einer Innenseite der Seitenwand (10) anliegt, und wobei sich der Anlageblock (41) an den Flansch (42) anschließt und mit seiner vorderseitigen Anlagefläche den vorgegebenen Abstand bestimmt.

2. Vorrichtung nach Anspruch 1,
**dadurch gekennzeichnet,**
**dass** die unteren Halteelemente (30) mit einem Befestigungsblock (35) die Einstecknut (31) zur Seitenwand (10) hin begrenzen und dass der Befestgiungsblock (35) den vorgegebenen Abstand zur Seitenwand (10) bestimmt.

3. Vorrichtung nach Anspruch 2,
**dadurch gekennzeichnet,**
**dass** der Befestigungsblock (35) mit der Unterseite (38) auf der Bodenwand (11) und mit der Rückseite (39) an der Seitenwand (10) anliegend befestigt ist.

4. Vorrichtung nach einem der Ansprüche 1 bis 3,
**dadurch gekennzeichnet,**
**dass** die Fixieraufnahmen (23) an der Unterseite (25) der Montageplatte (10) portalartig ausgebildet sind und
**dass** die in die Einstecknut (31) ragenden Fixierelemente (32) mit ihren Außenseiten an diese Fixieraufnahmen (23) angepasst sind.

5. Vorrichtung nach Anspruch 4,
**dadurch gekennzeichnet,**
**dass** die Fixierelemente (32) in der horizontalen Mitte der Einstecknut (31) der unteren Halteelemente (30) angeordnet sind.

6. Vorrichtung nach einem der Ansprüche 1 bis 5,
**dadurch gekennzeichnet,**
**dass** die der Seitenwand (10) abgekehrte Nutwand (34) der Einstecknut (31) als Einfuhrschräge mit zur Nutgrundwand stumpfem Winkel ausgebildet ist.

7. Vorrichtung nach einem der Ansprüche 1 bis 6,
**dadurch gekennzeichnet,**
**dass** die Unterseite (25) der Montageplatte (10) die beiden Fixieraufnahmen (23) mit vorgegebenem horizontalem Abstand trägt und dass die beiden unteren Halteelemente (30) so an der Seitenwand (10) und/oder der anschließenden Bodenwand (11) des Schaltschrankes befestigt sind, dass ihre Fixierelemente (32) denselben horizontalen Abstand einnehmen.

8. Vorrichtung nach einem der Ansprüche 1 bis 7,
**dadurch gekennzeichnet,**
**dass** im Bereich der oberen Halteelemente (40) die Seitenwand (10) jeweils zwei horizontal beabstandete Gewindebolzen (15, 16) trägt, von denen einer den Anlageblock (41) des oberen Halteelementes (40) durchdringt und durch eine Bohrung (24) in der Oberseite (26) der Montageplatte (20) geführt ist, und
**dass** mit einer Mutter (18) die Montageplatte (20) am Anlageblock (41) des oberen Halteelementes (40) festgelegt und das obere Halteelement (40) gleichzeitig an der Seitenwand (10) befestigt ist.

9. Vorrichtung nach Anspruch 8,
**dadurch gekennzeichnet,**
**dass** die Anlagefläche des Anlageblockes (41) einen Zentrierbund (48) aufweist, der in eine als Zentrieraufnahme ausgebildete Bohrung (24) der Montageplatte (20) eingeführt ist und
**dass** der erste als Befestigungsbolzen ausgebildete Gewindebolzen (15) durch den Zentrierbund (48) geführt ist.

10. Vorrichtung nach Anspruch 8 und 9,
**dadurch gekennzeichnet,**
**dass** der zweite Gewindebolzen (16) in eine Aufnahme (49) des Anlageblockes (41) des oberen Halteelementes (40) eingeführt ist und zusammen mit dem ersten Gewindebolzen (15) das obere Halteelement (40) unverdrehbar an der Seitenwand (10) festlegt.

11. Vorrichtung nach einem der Ansprüche 1 bis 10,
**dadurch gekennzeichnet,**
**dass** eine Montageplatte (20) an der Unterseite (25) zwei beabstandete Fixieraufnahmen (23) und an der Oberseite (26) zwei Bohrungen (24) als Fixieraufnahmen mit gleichem horizontalem Abstand aufweist, dass die Fixieraufnahmen (23) und die Bohrungen (24) vertikal aufeinander ausgerichtet sind und
**dass** die Halteelemente (30, 40) horizontal und vertikal so beabstandet sind, dass an der Unterseite (25) der Montageplatte (20) zwei Steckverbindungen mit horizontaler Fixierung und an der Oberseite (26) der Montageplatte (20) zwei Rastverbindungen mit horizontaler Fixierung gebildet sind.

12. Vorrichtung nach einem der Ansprüche 1 bis 11,
**dadurch gekennzeichnet,**
**dass** die Montageplatte (20) an den vertikalen Seiten abgekantete Ränder (21, 22) aufweisen und
**dass** die Fixieraufnahmen (23) und die Bohrungen (24) der Montageplatte (20) einen Abstand zu diesen Rändern (21, 22) aufweisen, der größer ist als die halbe horizontale Breite der Halteelemente (30, 40).

## Claims

1. Device for fastening a mounting plate spaced apart from a sidewall of a switchgear cabinet at a set distance by means of retention elements associated with the lower face and the upper face of the mounting plate and mounted on the switchgear cabinet, wherein at least two lower retention elements (30) are associated with the lower face (25) of the mounting plate (20), wherein the lower retention elements (30) comprise for the lower face (25) of the mounting plate (20) at the set distance to the side wall (10) a horizontal insertion slot (31) open at the top, wherein the insertion slot (31) carries a fixing element (32) extending into the insertion slot (31) for a fixture reception slot (23) at the lower face (25) of the mounting plate (20), wherein the top face (26) of the mounting plate (20) is associated with at least one upper retention element (40) forming in said set distance to the side wall (10) with a bearing block (41) a bearing surface for the mounting plate (20), and wherein above said bearing surface (41) the upper retaining element (40) comprises a latch spring (45) with a latch bevel (46) and a latch (47), wherein the latch (47) in the attachment position of the mounting plate (20) engages the bearing block (41) behind the upper surface (26) of the mounting plate (20) and fixes said upper surface (26) at the upper retaining element (40),
**characterized in that**
each of said lower retaining elements (30) is mounted on the sidewall (10) and/or an adjacent bottom wall (11) for which purpose it abuts or is mounted via the backside (39) of a mounting block (35) on the sidewall (10), while a bottom side (38) of the mounting block (35) stands on or is connected to the bottom wall (11), wherein the upper retaining element (40) abuts on the back side via a flange (42) on an inner side of the side wall (10), and wherein the bearing block (41) is attached to the flange (42) and determines via its bearing surface at the front side the set distance.

2. Device according to claim 1,
**characterized in that**
the lower retaining elements (30) limits with the aid of a mounting block (35) the insertion slot (31) in the direction towards the sidewall (10), and
the mounting block (35) determines the set distance to the sidewall (10).

3. Device according to claim 2,
**characterized in that**
the mounting block (35) is mounted in an abuting manner via the bottom side (38) on the bottom wall (11) and via the back side (39) on the side wall (10).

4. Device according to one of claims 1 to 3,
**characterized in that**
the fixture reception slot (23) at the bottom side (25) of the mounting plate (10) is formed in a portal manner, and
the fixture elements (32) extending into the insertion slot (31) comprise outer faces that are adapted to the fixture reception slots (23).

5. Device according to claim 4,
**characterized in that**
the fixture elements (32) are located in the horizontal center of the insertion slot (31) of the lower retaining elements (30).

6. Device according to one of claims 1 to 5,
**characterized in that**
the slot wall (34) of the insertions slot (31) averted to the sidewall (10) is formed like a reception bevel enclosing an obtuse angle with the slot bottom wall.

7. Device according to one of claims 1 to 6,
**characterized in that**
the bottom face (25) of the mounting plate (10) carries both fixture reception slots (23) at set horizontal distance, and
the two lower retaining elements (30) are mounted in such a way at the sidewall (10) and/or the adjacent bottom wall (11) of the switchgear cabinet that the fixture elements engage the same horizontal distance.

8. Device according to one of claims 1 to 7,
**characterized in that**
in the area of the upper retaining elements (40) the sidewall (10) respectively carries two horizontally spaced apart threaded bolts (15, 16), wherein one of these extents through the bearing block (41) of the upper retaining element (40) and is guided through a bore (24) in the upper side (26) of the mounting plate (20), and
the mounting plate (20) is fixed by means of a nut (18) at the bearing block (41) of the upper retaining element (40), wherein the upper retaining element (40) is fixed simultaneously at the side wall (10).

9. Device according to claim 8,
**characterized in that**
the bearing surface of the bearing block (41) comprises a centering collar (48) that is guided into a bore (24) of the mounting plate (20) that is formed as a centering reception, and
the first threaded bolt (15) formed as a mounting bolt is guided through the centering collar (48).

10. Device according to claim 8 and 9,
**characterized in that**
the second threaded bolt (16) is guided into a reception slot (49) of the bearing block (41) of the upper retaining element (40) and fixes along with the first threaded bolt (15) said upper retaining element (40) at the sidewall (10) in a manner that it may not be turned out of position.

11. Device according to one of claims 1 to 10,
**characterized in that**
the mounting plate (20) comprises at the bottom face (25) two spaced apart fixture receptions slots (23) and two bores (24) at the top face (26) as fixture reception slots having the same horizontal distance,
the fixture reception slots (23) and the bores (24) are oriented vertically to one another, and
the retaining elements (30, 40) are spaced apart horizontally and vertically in such a manner that at the lower face (25) of the mounting plate (20) are formed two plug-in connectors having horizontal fixation, and that at the top face (26) of the mounting plate (20) are formed two latch connectors with horizontal fixation.

12. Device according to one of claims 1 to 11
**characterized in that**
the mounting plate (20) comprises at the vertical sides beveled edges (21, 22), and the fixture reception slots (23) and the bores (24) of the mounting plate (20) comprise a distance to said edges (21, 22) that is greater than half of the horizontal width of the retaining elements (30, 40).

## Revendications

1. Dispositif pour la fixation d'une plaque de montage à une distance prédéterminée d'une paroi latérale d'une armoire de commande à l'aide d'éléments de retenue, qui sont affectés à la face inférieure et à la face supérieure de la plaque de montage et sont fixés à l'armoire de commande, dans lequel au moins deux éléments de retenue inférieurs (30) sont affectés à la face inférieure (25) de la plaque de montage (20), les éléments de retenue inférieurs (30) présentant à la distance prédéfinie avec la paroi latérale (10) une rainure d'insertion (31) horizontale, ouverte vers le haut, pour la face inférieure (25) de la plaque de montage (20) ; la rainure d'insertion (31) portant un élément de fixation (32), dépassant dans la rainure d'insertion (31), pour un logement de fixation (23) prévu contre la face inférieure (25) de la plaque de montage (20) ; au moins un élément de retenue supérieur (40) étant affecté à la face supérieure (26) de la plaque de montage (20), élément de retenue qui, à la distance prédéfinie avec la paroi latérale (10), forme avec un bloc d'appui (41) une surface d'appui pour la plaque de montage (20) ; et, au-dessus du bloc d'appui (41), l'élément de retenue supérieur (40) comprend un ressort d'encliquetage (45) comportant un chanfrein d'encliquetage (46) et un épaulement d'encliquetage (47), l'épaulement d'encliquetage (47) passant, dans la position d'appui de la plaque de montage (20) contre le bloc d'appui (41), derrière la face supérieure (26) de la plaque de montage (20) et s'engageant contre l'élément de retenue supérieur (40),
**caractérisé en ce que**
chacun des éléments de retenue inférieurs (30) est fixé à la paroi latérale (10) et/ou à une paroi de fond contiguë (11), ce pour quoi, par l'intermédiaire de la face arrière (39) d'un bloc de fixation (35), il s'appuie ou est fixé contre la paroi latérale (10), tandis qu'une face inférieure (38) du bloc de fixation (35) s'élève sur la paroi de fond (11) ou est reliée à cette dernière, l'élément de retenue supérieur (40) s'appuyant côté arrière, par une collerette (42), contre la face intérieure de la paroi latérale (10), et le bloc d'appui (41) se poursuivant par la collerette (42) et, par sa surface d'appui côté avant, déterminant la distance prédéfinie.

2. Dispositif selon la revendication 1,
**caractérisé en ce que**
les éléments de retenue inférieurs (30) délimitent, avec un bloc de fixation (35), la rainure d'insertion (31) vers la paroi latérale (10), et que le bloc de fixation (35) détermine la distance prédéfinie avec la paroi latérale (10).

3. Dispositif selon la revendication 2,
**caractérisé en ce que**
le bloc de fixation (35) est, par sa face inférieure (38), fixé en appui sur la paroi de fond (11) et, par sa face arrière (39), contre la paroi latérale (10).

4. Dispositif selon l'une des revendications 1 à 3,
**caractérisé en ce que**
les logements de fixation (23) sont configurés comme des portiques contre la face inférieure (25) de la plaque de montage (10), et que les éléments de fixation (32) dépassant dans la rainure d'insertion (31) sont par leurs faces extérieures adaptés à ces logements de fixation (23).

5. Dispositif selon la revendication 4,
**caractérisé en ce que**
les éléments de fixation (32) sont disposés dans la partie centrale horizontale de la rainure d'insertion (31) des éléments de retenue inférieurs (30).

6. Dispositif selon l'une des revendications 1 à 5,
**caractérisé en ce que**
la paroi de rainure (34) de la rainure d'insertion (31), opposée à la paroi latérale (10), est configurée comme un chanfrein d'introduction, faisant un angle obtus avec la paroi de fond de la rainure.

7. Dispositif selon l'une des revendications 1 à 6,
**caractérisé en ce que**
la face inférieure (25) de la plaque de montage (10) porte les deux logements de fixation (23), avec une distance horizontale prédéfinie, et que les deux éléments de retenue inférieurs (30) sont fixés à la paroi latérale (10) et/ ou à la paroi de fond contiguë (11) de l'armoire de commande de telle sorte que leurs éléments de fixation (32) occupant la même distance horizontale.

8. Dispositif selon l'une des revendications 1 à 7,
**caractérisé en ce que**,
dans la zone des éléments de retenue supérieurs (40), chaque paroi latérale (10) porte deux boulons filetés (15, 16) se trouvant à une distance horizontale l'un de l'autre, dont l'un traverse le bloc d'appui (41) de l'élément de retenue supérieur (40), et est guidé par un alésage (24) aménagé dans la face supérieure (26) de la plaque de montage (20), et **en ce qu'**un écrou (18) assujettit la plaque de montage (20) contre le bloc d'appui (41) de l'élément de retenue supérieur (40), et que l'élément de retenue supérieur (40) est simultanément fixé à la paroi latérale (10).

9. Dispositif selon la revendication 8,
**caractérisé en ce que**
la surface d'appui du bloc d'appui (41) présente un collet de centrage (48), qui est inséré dans un alésage (24), configuré comme un logement de centrage, de la plaque de montage (20), et que le premier boulon fileté (15), configuré comme un boulon de fixation, est guidé à travers le collet de centrage (48).

10. Dispositif selon la revendication 8 ou 9,
**caractérisé en ce que**
le deuxième boulon fileté (16) est introduit dans un logement (49) du bloc d'appui (41) de l'élément de retenue supérieur (40) et, avec le premier boulon fileté (15), assujettit sans possibilité de torsion l'élément de retenue supérieur (40) contre la paroi latérale (10).

11. Dispositif selon l'une des revendications 1 à 10,
**caractérisé en ce**
**qu'**une plaque de montage (20) comprend, sur sa face inférieure (25), deux logements de fixation (23) à distance l'un de l'autre et, sur sa face supérieure (26), deux alésages (24) en tant que logements de fixation présentant la même distance horizontale ; que les logements de fixation (23) et les alésages (24) sont orientés verticalement l'un au-dessus de l'autre ; et
**que** les éléments de retenue (30, 40) présentent entre eux une distance horizontale et une distance verticale telles que, sur la face inférieure (25) de la plaque de montage (20), il y ait formation de deux assemblages par emboîtement avec fixation horizontale et, sur la face supérieure (26) de la plaque de montage (20), deux assemblages par encliquetage avec fixation horizontale.

12. Dispositif selon l'une des revendications 1 à 11,
**caractérisé en ce que**
la plaque de montage (20) présente des bords (21, 22) repliés contre les faces verticales, et que les logements de fixation (23) et les alésages (24) de la plaque de montage (20) présentent avec ses bords (21, 22) une distance qui est supérieure à la moitié de la largeur horizontale des éléments de retenue (30, 40).
